# EUROPÄISCHE PATENTANMELDUNG

(11) **EP 2 696 104 A2**
(43) Veröffentlichungstag der Anmeldung: **12.02.2014**
(21) Anmeldenummer: 13178214.6
(22) Anmeldetag: 26.07.2013
(51) Int. Cl.: F16H 3/089, F16H 3/10, F16D 25/0638, B60K 1/00

(54) **Stufengetriebe für ein Kraftfahrzeug und Verfahren zu dessen Betreiben**

(30) Priorität: 06.08.2012 DE 102012015863
(71) Anmelder: GETRAG Getriebe- und Zahnradfabrik Hermann Hagenmeyer GmbH & Cie KG, 74199 Untergruppenbach (DE)
(72) Erfinder: ROTHVOSS, Stefan, 71711 Steinheim (DE); BAUSCH, Jochen, 74321 Bietigheim (DE); Ruehle, Guenter, 74369 Löchgau (DE)
(74) Vertreter: Witte, Weller & Partner

(57) **Zusammenfassung**

Stufengetriebe (14) für ein Kraftfahrzeug, mit einem Getriebeeingang (24), der mit einem Antriebsmotor (12) verbindbar ist, und mit einem Getriebeausgang (26), der mit einer angetriebenen Achse (16) eines Kraftfahrzeuges verbindbar ist, wobei das Stufengetriebe (14) zur Einrichtung wenigstens einer ersten und einer weiteren Gangstufe (1, 2; 1, 3) ausgebildet ist, wobei eine Kraftübertragung von Getriebeeingang (24) zu Getriebeausgang (26) in der ersten Gangstufe (1) über eine erste Kupplungsanordnung (40) erfolgt, wobei eine Kraftübertragung von Getriebeeingang (24) zu Getriebeausgang (26) in der weiteren Gangstufe (2) über eine zweite Kupplungsanordnung (50) erfolgt, und wobei die zweite Kupplungsanordnung (50) eine Lastschaltkupplung (52) aufweist. Dabei weist die erste Kupplungsanordnung (50) eine Freilaufkuppung (42) auf.

## Beschreibung

Die vorliegende Erfindung betrifft ein Stufengetriebe für ein Kraftfahrzeug, mit einem Getriebeeingang, der mit einem Antriebsmotor verbindbar ist, und mit einem Getriebeausgang, der mit einer angetriebenen Achse eines Kraftfahrzeuges verbindbar ist, wobei das Stufengetriebe zur Einrichtung wenigstens einer ersten und einer weiteren Gangstufe ausgebildet ist, wobei eine Kraftübertragung von Getriebeeingang zu Getriebeausgang in der ersten Gangstufe über eine erste Kupplungsanordnung erfolgt, wobei eine Kraftübertragung von Getriebeeingang zu Getriebeausgang in der weiteren Gangstufe über eine zweite Kupplungsanordnung erfolgt und wobei die zweite Kupplungsanordnung eine Lastschaltkupplung aufweist.

Ferner betrifft die vorliegende Erfindung Verfahren zum Durchführen von Zug-Hochschaltungen und Zug-Rückschaltungen in einem derartigen Stufengetriebe, sowie ein Verfahren zum Betreiben des Stufengetriebes in einem Rückwärtsfahrbetrieb.

Ein Stufengetriebe der oben genannten Art ist aus dem Dokument DE 199 17 724 A1 bekannt.

Aus diesem Dokument ist es bekannt, einen Antriebsstrang für ein Elektro- oder ein Hybridfahrzeug bereitzustellen, wobei der Antriebsstrang ein lastschaltbares 2-Gang-Getriebe aufweist. Dabei ist eine elektrische Maschine über einen Konstanten-Radsatz mit einer Getriebeeingangswelle verbunden, an der zwei Losräder drehbar gelagert sind. Die Losräder sind mittels lastschaltfähiger Reibkupplungen mit der Getriebeeingangswelle verbindbar. Ferner ist ein Differential mit zwei Triebrädern verbunden, die direkt mit den zwei Losrädern in Eingriff stehen. Auf diese Weise kann ein kompakter Antriebsstrang für ein elektrisch angetriebenes Kraftfahrzeug bereitgestellt werden. Durch die zwei Gangstufen kann eine Spreizung erzielt werden, die sowohl einen Betrieb im Stadtverkehr wie auch im Überlandverkehr energieeffizient ermöglicht.

Nachteilig ist bei diesem Antriebsstrang zum einen die Verwendung von zwei relativ großen Zahnkränzen (Triebrädern) am Differential, und zwar hinsichtlich Gewicht, Massenträgheit und Herstellungskosten. Ferner ist der Aufwand zum Bereitstellen der Lastschaltfähigkeit vergleichsweise groß, da zwei lastschaltfähige Reibkupplungen mit zugehöriger Aktuatorik und zugehörigen Steuereinrichtungen bereitgestellt werden müssen.

Demzufolge ist es eine Aufgabe der Erfindung, ein verbessertes Stufengetriebe sowie verbesserte Verfahren zum Betreiben eines solchen Stufengetriebes anzugeben, wobei das Stufengetriebe hinsichtlich Gewicht, Massenträgheit und Herstellungskosten verbessert ist und/oder wobei der Gesamtaufwand zur Bereitstellung eines lastschaltfähigen Stufengetriebes mit wenigstens zwei Gangstufen verringert werden kann.

Diese Aufgabe wird bei dem eingangs genannten Stufengetriebe dadurch gelöst, dass die erste Kupplungsanordnung eine Freilaufkupplung aufweist.

Bei dieser Ausführungsform ist es nicht notwendig, für die erste Kupplungsanordnung eine Lastschaltkupplung bereitzustellen. Demzufolge entfällt der Aufwand für deren Bereitstellung sowie für die Bereitstellung zugeordneter Aktuatorik und Steuersoftware. Für Lastschaltungen zwischen der ersten und der weiteren Gangstufe muss folglich nur die eine Lastschaltkupplung der zweiten Kupplungsanordnung gezielt angesteuert werden. Eine Ansteuerung, bei der eine Drucküberschneidung von zwei Lastschaltkupplungen notwendig ist, ist aufgrund der Freilaufkupplung nicht notwendig.

Ferner ergibt sich ein Potential für weitere Einsparungen aufgrund einer unkritischeren Funktionssicherheits-(FuSi)-Einstufung und aufgrund der durch die Funktion der Freilaufkupplung geringeren Anforderung an die Druckregelgüte der Lastschaltkupplung.

Zudem ist gegebenenfalls eine Kraftübertragung von Getriebeeingang zu Getriebeausgang auch ohne Aktuierung möglich. Damit ist vorzugsweise bei Ausfall der Aktuatorik kein Liegenbleiber zu erwarten ("Limp-Home"-Fähigkeit).

Die Freilaufkupplung ist dabei vorzugsweise so angeordnet bzw. ausgebildet, dass über die Freilaufkupplung ein positives Drehmoment in der ersten Gangstufe übertragen werden kann (das heißt bei Vorwärtsfahrt), und dass in einer entgegengesetzten Dreh- bzw. Belastungsrichtung die Freilaufkupplung öffnet. Die Freilaufkupplung kann folglich bei einer Rückwärtsfahrt generell kein Drehmoment übertragen, so dass ein Rückwärtsfahrbetrieb in der ersten Gangstufe nicht ohne Weiteres möglich ist.

Die Erfindung wird ferner realisiert durch ein Verfahren zum Durchführung einer Zug-Hochschaltung von der ersten in die zweite Gangstufe eines derartigen Stufengetriebes, mit den Schritten, die zweite Kupplungsanordnung kontinuierlich zu schließen, um das Drehmoment allmählich zu übernehmen, wobei die Freilaufkupplung das jeweilige Restdrehmoment überträgt, und nach der Drehmomentübergabe eine Drehzahlanpassung durchzuführen.

Hierbei wird vor dem vollständigen Schließen der Lastschaltkupplung diese während der Drehzahlanpassung schlupfend betrieben.

Ferner lässt sich mit dem erfindungsgemäßen Stufengetriebe ein Verfahren zum Durchführen einer Zug-Rückschaltung von der zweiten in die erste Gangstufe durchführen, mit den Schritten, die zweite Kupplungsanordnung zunächst in einen Schlupfzustand zu bringen und anschließend die Drehzahl am Getriebeeingang auf eine Zieldrehzahl der ersten Gangstufe zu erhöhen und den Schlupfzustand wieder abzubauen, wobei anschließend das von der zweiten Kupplungsanordnung übertragene Drehmoment verringert wird, bis das Drehmoment von der Freilaufkupplung übertragen wird.

Schließlich kann mit dem erfindungsgemäßen Verfahren ein Rückwärtsfahrbetrieb eingerichtet werden, indem die der zweiten Gangstufe zugeordnete Lastschaltkupplung so schlupfend betrieben wird, dass ein Verspannungszustand in dem Stufengetriebe unterhalb eines vorbestimmten Schwellenwertes bleibt.

Die Aufgabe wird somit vollkommen gelöst.

Von besonderem Vorzug ist es bei dem erfindungsgemäßen Stufengetriebe, wenn die Freilaufkupplung mittels einer schaltbaren Überbrückungskupplung überbrückbar und/oder von dem Getriebeausgang entkoppelbar ist.

In der ersten Alternative wird die Freilaufkupplung mittels der Überbrückungskupplung in einer Schaltposition überbrückt, so dass eine Drehmomentübertragung sowohl in positiver als auch in negativer Richtung möglich ist. Bei dieser Ausführungsform kann ein Rückwärtsfahrbetrieb eingerichtet werden, indem die Überbrückungskupplung in diese geschlossene Position (Überbrückungsposition) gebracht wird. Ferner kann die Überbrückungsposition bei einer Fahrt in der ersten Gangstufe eingerichtet werden, um die Freilaufkupplung zu entlasten oder um Schubmoment zu übertragen.

Bei der alternativen Ausgestaltung ermöglicht die Überbrückungskupplung, die Freilaufkupplung von dem Getriebeausgang zu entkoppeln. In diesem Fall kann die Überbrückungskupplung zum Einrichten des Rückwärtsfahrbetriebes in die Entkopplungsposition gebracht werden. In diesem Fall kann der Rückwärtsfahrbetrieb über die zweite Gangstufe eingerichtet werden, ohne dass ein Verspannungszustand in dem Getriebe auftritt.

Die Überbrückungskupplung kann als formschlüssige oder als kraft-schlüssige schaltbare Kupplung ausgebildet sein, beispielsweise als Synchron-Kupplung.

Von besonderem Vorzug ist es, wenn die Überbrückungskupplung als Klauenkupplung oder als Reibkupplung ausgebildet ist.

Da die Überbrückungskupplung in der Regel ohnehin nur dann zu betätigen ist, wenn eine Drehzahlangleichung erfolgen kann oder bereits erfolgt ist, sind aufwändige Synchronisierungseinrichtungen für die Überbrückungskupplung vorzugsweise entbehrlich. Die Überbrückungskupplung kann folglich kostengünstig hergestellt werden.

Ferner ist es vorteilhaft, wenn die Überbrückungskupplung mittels einer mechanischen Vorspannungseinrichtung in eine geöffnete Position vorgespannt ist, bei der die Freilaufkupplung nicht überbrückt ist, oder in eine geschlossene Position vorgespannt ist, in der die Freilaufkupplung mit dem Getriebeausgang gekoppelt ist.

Sofern die schaltbare Überbrückungskupplung dazu dient, die Freilaufkupplung entweder freizugeben oder starr zu überbrücken, ist es bevorzugt, wenn die Vorspannungseinrichtung die Freilaufkupplung in den nicht überbrückten Zustand vorspannt. Wenn die Überbrückungskupplung hingegen dazu dient, die Freilaufkupplung von dem Getriebeausgang zu entkoppeln, ist es bevorzugt, wenn die Vorspannungseinrichtung die Überbrückungskupplung so vorspannt, dass die Freilaufkupplung mit dem Getriebeausgang gekoppelt ist.

Mit anderen Worten wird die Vorspannungseinrichtung dazu verwendet, die Überbrückungskupplung in eine solche Position zu versetzen, in der die normale Funktion der Freilaufkupplung eingerichtet ist.

Bei dieser Ausführungsform ist eine Betätigung der Überbrückungskupplung nur in bestimmten Betriebssituationen erforderlich. Bei dieser Ausführungsform kann folglich auch die Aktuierung der Überbrückungskupplung vereinfacht werden.

Insgesamt ist es vorteilhaft, wenn die Lastschaltkupplung mittels eines ersten hydraulischen Aktuators betätigbar ist, der mit einer Pumpe direkt verbunden ist, deren Drehzahl zur Betätigung der Lastschaltkupplung steuerbar ist.

Ein derartiger "Pumpenaktuator" ermöglicht eine Druckregelung zur Betätigung der Lastschaltkupplung durch Einstellen der Drehzahl der Pumpe. Vorteilhaft hierbei ist, dass Proportionalventile oder dergleichen zum Einstellen eines Kupplungsdruckes nicht erforderlich sind. Der Aufwand für die Montage kann daher verringert werden, da keine erhöhten Anforderungen an die Sauberkeit bei der Montage zu stellen sind.

Der erste hydraulische Aktuator kann mittels einer mechanischen Vorspannungseinrichtung in eine Position vorgespannt sein, bei der die Lastschaltkupplung geöffnet ist. Zum schnellen Öffnen der Kupplung ist es ferner bevorzugt, wenn die Pumpe als bidirektionale Pumpe ausgebildet ist. Um die Lastschaltkupplung zu schließen, wird die Pumpe dabei in der einen Drehrichtung angetrieben. Um die Lastschaltkupplung zu öffnen, wird die Pumpe dabei in der anderen Drehrichtung angetrieben.

Gemäß einer weiteren bevorzugten Ausführungsform ist die Pumpe als bidirektionale Pumpe ausgebildet, deren erster Anschluss mit dem ersten hydraulischen Aktuator verbunden ist und deren zweiter Anschluss mit einem zweiten hydraulischen Aktuator verbunden ist, der der ersten Kupplungsanordnung zugeordnet ist.

Bei dieser Ausführungsform kann eine Aktuierung in der ersten Kupplungsanordnung auf einfache Weise mittels der gleichen Druckversorgungsquelle (Pumpe) erfolgen, mittels der auch die Lastschaltkupplung der ersten Kupplungsanordnung betätigt wird. Denn eine zeitgleiche Aktivierung der ersten und der zweiten Kupplungsanordnung ist aufgrund der Freilaufkupplung bei Lastschaltungen nicht erforderlich.

Von besonderem Vorzug ist es dabei, wenn der zweite hydraulische Aktuator zur Betätigung einer Überbrückungskupplung der ersten Kupplungsanordnung ausgebildet ist.

Die Überbrückungskupplung kann, wie oben erläutert, zum Überbrücken der Freilaufkupplung oder zum Entkoppeln der Freilaufkupplung von dem Getriebeausgang ausgebildet sein, und kann gegebenenfalls in eine Grundposition mechanisch vorgespannt sein.

Mittels des zweiten hydraulischen Aktuators kann die Überbrückungskupplung gegen die mechanische Vorspannung in die zweite Position geschaltet werden, um beispielsweise einen Rückwärtsfahrbetrieb einzurichten.

Insgesamt ist es vorteilhaft, wenn die Pumpe mittels eines Elektromotors in wenigstens einer Drehrichtung antreibbar ist.

Auf diese Weise können die Drehzahl und die Drehrichtung der Pumpe durch Ansteuerung des Elektromotors gesteuert bzw. geregelt werden.

Generell ist es vorteilhaft, wenn zum Einrichten einer Regelung der mit dem ersten hydraulischen Aktuator verbundene Pumpenanschluss mit einem Drucksensor verbunden ist.

Sofern ein zweiter Anschluss der Pumpe mit einem zweiten hydraulischen Aktuator verbunden ist, kann der zweite Anschluss mit einem weiteren Drucksensor verbunden sein. In einer alternativen Ausgestaltung ist ein solcher Drucksensor jedoch nicht notwendig, da die Überbrückungskupplung ohnehin nur zwischen zwei Zuständen hin- und hergeschaltet wird. Gegebenenfalls ist hier auch ein Anschlagsensor oder dergleichen hinreichend, um Sicherheit über die jeweils eingerichtete Position zu erlangen.

Von besonderem Vorzug ist es jedoch, wenn der erste und der zweite Anschluss der Pumpe über ein Wechselventil mit einem einzelnen Drucksensor verbunden sind.

Bei dieser Ausführungsform kann durch Bereitstellung eines einfachen Wechselventils jeweils der höhere der Drücke an den zwei Anschlüssen der Pumpe erfasst werden. In der einen Drehrichtung der Pumpe wird dies immer der Druck in dem ersten hydraulischen Aktuator sein, bei der zweiten Drehrichtung der Druck in dem zweiten hydraulischen Aktuator.

Ferner ist es von Vorteil, wenn eine noch weitere Gangstufe mittels einer dritten Kupplungsanordnung einrichtbar ist, die eine zweite Lastschaltkupplung aufweist.

Bei dieser Ausführungsform kann das Stufengetriebe mit drei Gangstufen realisiert werden. Hierdurch kann ein noch komfortablerer Betrieb eingerichtet werden. Bei dieser Ausführungsform können Gangwechsel von der ersten in eine der weiteren Gangstufen sowie auch Gangwechsel zwischen den weiteren Gangstufen jeweils unter Last durchgeführt werden. Bei Gangwechseln zwischen den weiteren Gangstufen, denen jeweils eine Lastschaltkupplung zugeordnet ist, können Gangwechsel unter Last nicht nur als Zugschaltungen, sondern auch als Schubschaltungen durchgeführt werden.

Jener der dann vorgesehenen zwei Lastschaltkupplungen, die vorzugsweise mittels derselben Pumpenaktuatorik angetrieben wird wie eine der Freilaufkupplung zugeordnete Überbrückungskupplung, ist vorzugsweise die höchste (dritte) Gangstufe eines derartigen Stufengetriebes zugeordnet. In diesem Fall wird die zweite Gangstufe vorzugsweise mittels einer eigenen Pumpenaktuatoranordnung angesteuert, die eine zweite Pumpe und vorzugsweise einen zweiten Elektromotor aufweist, der die zweite Pumpe antreibt, wobei die Kupplungsdruckeinstellung durch Einstellen der Drehzahl der zweiten Pumpe realisiert wird. Jene Gangstufe, der eine "eigene" Pumpenaktuatorik zugeordnet ist, ist vorzugsweise eine Zwischengangstufe (zweite Gangstufe).

Ein Getriebeausgang des Stufengetriebes ist vorzugsweise über einen einzelnen Triebsatz mit einem Differential der angetriebenen Achse verbunden, so dass der Antriebsstrang mit geringem Gewicht und geringen Herstellungskosten bereitgestellt werden kann. Dabei können die Zahnräder dieses Triebsatzes schrägverzahnt sein. In diesem Fall ist es bevorzugt, wenn eine Druckkammanordnung Axialkräfte aufnimmt, die durch die Schrägverzahnung entstehen.

An einer Getriebeausgangswelle kann ferner vorzugsweise ein Parksperrenrad festgelegt sein, das zum Einrichten einer Parkposition des Antriebsstranges bzw. des Kraftfahrzeuges dient.

Die angetriebene Achse kann gegenüber einer Antriebswelle des Antriebsmotors parallel versetzt angeordnet sein, kann jedoch auch koaxial zu der Antriebswelle angeordnet sein. Im letzteren Fall ist die Antriebswelle des Antriebsmotors vorzugsweise als Hohlwelle ausgebildet, durch die hindurch wenigstens eine Abtriebswelle der angetriebenen Achse geführt ist.

Insgesamt kann je nach Ausführungsform des oben beschriebenen Stufengetriebes im Vergleich zum Stand der Technik ein kostengünstigeres Aktuierungskonzept realisiert werden. Beispielsweise kann eine Lastschaltkupplung für die erste Gangstufe entfallen. Insbesondere muss kein separat ansteuerbarer Druckregel-Aktuator hierfür vorgesehen sein, so dass eine separate Druckversorgung, ein separater Drucksensor und gegebenenfalls eine separate Pumpe mit angekoppeltem Elektromotor nicht erforderlich sind. Auch eine zusätzliche Endstufe in dem Steuergerät ist nicht erforderlich.

Die Steuergerätearchitektur kann sich dadurch vereinfachen, dass das vorgeschlagene Stufengetriebe aufgrund der unkritischeren Funktionssicherheits-Einstufung von der Steuerungstechnik her einfacher aufgebaut werden kann. Auch sind Lastschal tungen durch die Freilauffunktion der Freilaufkupplung einfacher zu steuern bzw. zu regeln. Insbesondere sind geringere Anforderungen an die Druckregelgüte zum Betätigen der Lastschaltkupplung der zweiten Kupplungsanordnung zu stellen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges eines Kraftfahrzeuges mit einer ersten Ausführungsform eines erfindungsgemäßen Stufengetriebes;
- Fig. 2: eine schematische Ansicht einer weiteren Ausführungsform eines Antriebsstranges mit einer weiteren Ausführungsform eines erfindungsgemäßen Stufengetriebes;
- Fig. 3: eine schematische Ansicht eines weiteren Antriebsstranges mit einer weiteren Ausführungsform eines erfindungsgemäßen Stufengetriebes; und
- Fig. 4: eine schematische Ansicht eines weiteren Antriebsstranges mit einer weiteren Ausführungsform eines erfindungsgemäßen Stufengetriebes.

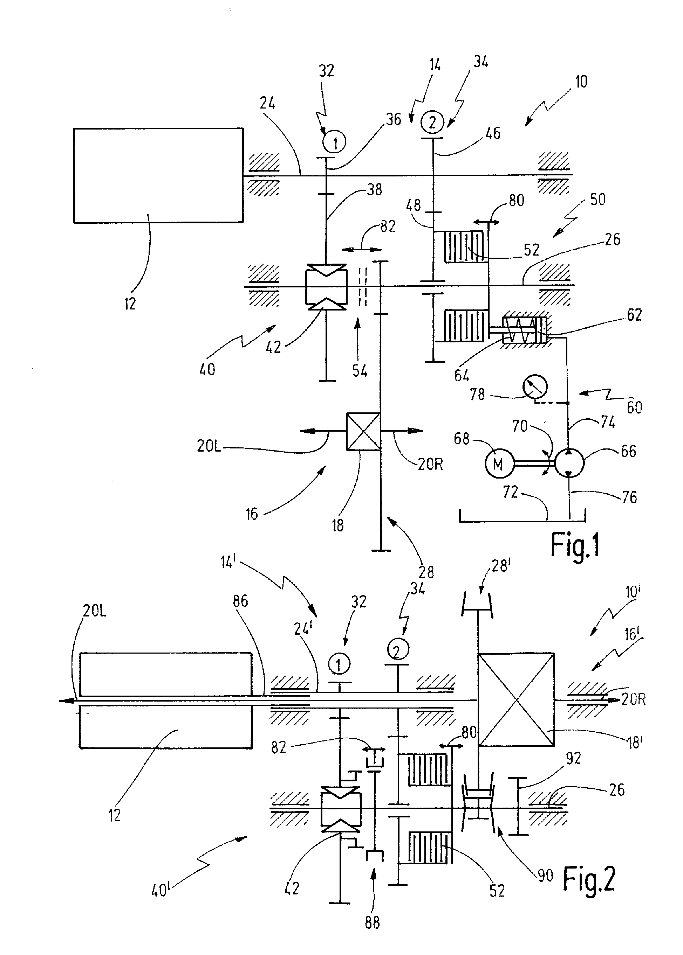

In Fig. 1 ist eine erste Ausführungsform eines Antriebsstranges für ein Kraftfahrzeug schematisch dargestellt und generell mit 10 bezeichnet. Der Antriebsstrang 10 beinhaltet einen Antriebsmotor 12, der als Verbrennungsmotor ausgebildet sein kann, jedoch insbesondere als Elektromotor (elektrische Maschine) ausgebildet sein kann. Der Antriebsstrang 10 weist ferner ein Stufengetriebe 14 mit einer ersten und einer zweiten Gangstufe 1, 2 sowie eine angetriebene Achse 16 auf. Die angetriebene Achse 16 beinhaltet ein Differential 18, das mit einem Getriebeausgang verbunden ist und das dazu ausgebildet ist, Antriebsleistung auf zwei angetriebene Räder 20L, 20R des Kraftfahrzeuges zu verteilen.

Der Antriebsstrang 10 dient zum Antrieb einer angetriebenen Achse. Es versteht sich, dass Leistung auch zum Antrieb einer zweiten angetriebenen Achse abgezweigt werden kann. Ferner ist es möglich, den Antriebsstrang einer Achse eines Kraftfahrzeuges zuzuweisen, und die andere Achse anzutreiben mittels eines herkömmlichen Antriebsstranges mit Verbrennungsmotor.

Der Antriebsmotor 12, der vorzugsweise als elektrische Maschine ausgebildet ist, ermöglicht einen rein elektrischen Antrieb des Kraftfahrzeuges. Der Antrieb kann dabei in der ersten Gangstufe 1 erfolgen, die vorzugsweise für ein Anfahren und für einen Fahrbetrieb bei niedrigen Geschwindigkeiten (Stadtbetrieb) ausgelegt sein kann. Über die zweite Gangstufe kann Antriebsleistung insbesondere in einem Überland-Fahrbetrieb eingerichtet werden.

In manchen Betriebsmodi kann dabei auch im Schubbetrieb eine Rekuperation erfolgen.

Das Stufengetriebe 14 weist eine Getriebeeingangswelle 24 auf, die mit einer Motorwelle des Antriebsmotors 12 vorzugsweise starr verbunden ist. Ferner weist das Stufengetriebe 14 eine Getriebeausgangswelle 26 auf, die parallel zu der Getriebeeingangswelle 24 angeordnet ist. Die Getriebeausgangswelle 26 ist über einen Abtriebsradsatz 28 ("Final-Drive") mit einem Eingangsglied des Differentials 18 verbunden.

Zum Einrichten der ersten Gangstufe ist ein erster Radsatz 32 vorgesehen. Zum Einrichten der zweiten Gangstufe ist ein zweiter Radsatz 34 vorgesehen. Der erste Radsatz 32 weist ein erstes Festrad 36 auf, das mit der Getriebeeingangswelle 24 verbunden ist. Ferner weist der erste Radsatz 32 ein erstes Losrad 38 auf, das an der Getriebeausgangswelle 26 gelagert ist und mit dem ersten Festrad 36 in Eingriff steht. Eine Kraftübertragung vom Getriebeeingang 24 zum Getriebeausgang 26 erfolgt in der ersten Gangstufe 1 dabei über eine erste Kupplungsanordnung 40, die eine Freilaufkupplung 42 aufweist. Das erste Losrad 38 ist dabei über die Freilaufkupplung 42 an der Getriebeausgangswelle 26 gelagert. Die Freilaufkupplung 42 ist dazu ausgebildet, positive Antriebsleistung (bei Vorwärtsfahrt) von der Getriebeeingangswelle 24 auf die Getriebeausgangswelle 26 zu übertragen. In der entgegengesetzten Drehrichtung kann über die Freilaufkupplung 42 jedoch kein Drehmoment übertragen werden, so dass ein Rückwärtsfahrbetrieb über die Freilaufkupplung 42 nicht möglich ist.

Der zweite Radsatz 34 weist ein zweites Festrad 46 auf, das fest mit der Getriebeeingangswelle 24 verbunden ist. Ferner weist der zweite Radsatz 34 ein zweites Losrad 48 auf, das drehbar an der Getriebeausgangswelle 26 gelagert ist. Ferner ist dem zweiten Radsatz 34 eine zweite Kupplungsanordnung 50 zugeordnet, die vorliegend eine Lastschaltkupplung 52 aufweist. Die Lastschaltkupplung 52 kann beispielsweise als nasslaufende Lamellenkupplung ausgebildet sein und dazu dienen, das zweite Losrad 48 mit der Getriebeausgangswelle 26 zu verbinden. Dabei ist die Lastschaltkupplung 52 so ansteuerbar, dass die Lastschaltkupplung 52 entweder geöffnet oder geschlossen betrieben werden kann, oder aber in einem schlupfenden Zustand.

Zum Einrichten eines Rückwärtsfahrbetriebes kann daher die Lastschaltkupplung 52 so schlupfend betrieben werden, dass ein geringes Drehmoment in Rückwärtsrichtung übertragen werden kann. Dabei ist die schlupfende Betriebsweise der Lastschaltkupplung 52 vorzugsweise so zu wählen, dass ein Verspannungszustand in dem Stufengetriebe 14 unterhalb eines vorbestimmten Schwellenwertes bleibt.

In einer optionalen Ausgestaltung des Stufengetriebes 14 ist eine Überbrückungskupplung 54 vorgesehen, die dazu ausgebildet ist, die Freilaufkupplung 42 von der Getriebeausgangswelle 26 zu entkoppeln. Sofern eine derartige Überbrückungskupplung vorgesehen ist, kann zum Einrichten eines Rückwärtsfahrbetriebes diese Überbrückungskupplung so geschaltet werden, dass die Freilaufkupplung 42 von dem Getriebeausgang 26 entkoppelt ist. In diesem Fall kann ein Rückwärtsfahrbetrieb durch Schließen der Lastschaltkupplung 52 eingerichtet werden.

Dem Stufengetriebe 14 ist ferner eine hydraulische Aktuatoranordnung 60 zugeordnet. Die Aktuatoranordnung 60 weist eine erste Kolben-/Zylinderanordnung 62 auf. Die erste Kolben-/Zylinderanordnung 62 ist dazu ausgebildet, die Lastschaltkupplung 52 zu betätigen Die erste Kolben-/Zylinderanordnung 62 weist vorzugsweise einen einzelnen Anschluss auf. Ferner kann die erste Kolben-/Zylinderanordnung 62 eine Rückstellfeder aufweisen, mittels der die erste Kolben-/Zylinderanordnung 62 in eine Position vorgespannt wird, in der die Lastschaltkupplung 52 geöffnet ist. Eine Rückstellfeder kann auch in die Lastschaltkupplung integriert sein.

Die Aktuatoranordnung 60 beinhaltet ferner eine hydraulische Pumpe 66, die von einem Elektromotor 68 angetrieben ist. Die Pumpe 66 ist dabei vorzugsweise eine bidirektionale Pumpe, deren Drehrichtungen in Fig. 1 schematisch bei 70 angedeutet sind.

Die Aktuatoranordnung beinhaltet ferner einen Fluidsumpf 72.

Die Pumpe 66 weist einen ersten Pumpenanschluss 74 auf, der direkt mit dem Anschluss der ersten Kolben-/Zylinderanordnung 62 verbunden ist. Ferner weist die Pumpe 66 einen zweiten Pumpenanschluss 76 auf, der im vorliegenden Fall mit dem Fluidsumpf 72 verbunden ist. Der erste Pumpenanschluss 74 ist ferner mit einem Drucksensor 78 verbunden.

Zum Betätigen der Lastschaltkupplung 52 wird die Pumpe 66 so in Drehung versetzt, dass Fluid aus dem Fluidsumpf 72 angesaugt und in den ersten Pumpenanschluss 74 und folglich in die erste Kolben-/Zylinderanordnung 62 gefördert wird. Der sich hierbei in der ersten Kolben-/Zylinderanordnung 62 einstellende Fluiddruck wird mittels des Drucksensors 78 gemessen. Diese Messgröße kann dazu verwendet werden, um den Druck des Fluides in der ersten Kolben-/Zylinderanordnung 62 zu regeln, indem der Elektromotor 68 hinsichtlich seiner Drehzahl geregelt wird. Die Betätigung der Lastschaltkupplung 52 erfolgt dabei gegebenenfalls entgegen der Wirkung der ersten Rückstellfeder 64.

Zum Öffnen der Lastschaltkupplung 52 wird der Elektromotor 68 entweder abgestellt, so dass sich die Lastschaltkupplung 52 beispielsweise mittels der ersten Rückstellfeder 64 öffnet. Alternativ oder zusätzlich hierzu kann die Pumpe 66 auch in der entgegengesetzten Drehrichtung betrieben werden, um Fluid schnell aus der ersten Kolben-/Zylinderanordnung 62 hin zu dem Fluidsumpf 72 abzusaugen.

Die Betätigungsrichtungen der Lastschaltkupplung 52 sind in Fig. 1 schematisch bei 80 gezeigt.

Ferner ist in Fig. 1 schematisch gezeigt, dass auch die Überbrückungskupplung 54, sofern eine derartige vorgesehen ist, betätigbar ist. Hierbei kann die Aktuatoranordnung 60 in geeigneter Weise erweitert werden (siehe unten). Ferner kann die Überbrückungskupplung auch durch andere Maßnahmen betätigt werden.

Es versteht sich, dass die Lastschaltkupplung 52 auch durch eine andere Aktuatorik, beispielsweise elektromechanischer Art, betätigt werden kann.

Die Betätigung der optionalen Überbrückungskupplung 54 ist in Fig. 1 bei 82 gezeigt.

Folgende Betriebsweisen sind mit dem Stufengetriebe 14 der Fig. 1 möglich, Zum einen ein Fahren im ersten Gang. Hierbei ist die Lastschaltkupplung 52 geöffnet. Die Freilaufkupplung 42 überträgt Drehmoment im Zug. Sofern die Überbrückungskupplung 54 vorgesehen ist, ist diese geschlossen. Beim Fahren im ersten Gang ist eine Übertragung von Moment im Schubbetrieb nicht möglich. Alternativ kann hierzu in die zweite Gangstufe geschaltet werden.

Beim Fahren in der zweiten Gangstufe ist die Lastschaltkupplung 52 geschlossen, die Freilaufkupplung 42 wird überrollt. Die Übertragung von Moment im Schubbetrieb und im Zugbetrieb sind uneingeschränkt möglich. Die Überbrückungskupplung 54 kann gegebenenfalls geschlossen werden.

Ein Fahren im Rückwärtsgang ist dann, wenn die Überbrückungskupplung 54 nicht vorgesehen ist, lediglich möglich, indem der Antriebsmotor in der entgegengesetzten Drehrichtung angetrieben wird und die Lastschaltschaltkupplung 52 im Schlupf betrieben wird, jedoch nur so, dass ein Verspannungszustand unterhalb eines vorbestimmten Schwellenwertes bleibt. Wenn die Überbrückungskupplung 54 vorgesehen ist, kann diese geöffnet werden. In diesem Fall kann ein Rückwärtsfahrbetrieb auch im geschlossenen Zustand der Lastschaltkupplung 52 erfolgen.

Ein Rollen/Segeln ist auch möglich. Hierbei ist die Lastschaltkupplung 52 geöffnet, und bei Vorwärtsfahrt wird die Freilaufkupplung 42 ggf. überrollt, so dass der Antriebsmotor 12 nicht mitdreht. Bei Rückwärtsfahrt sperrt die Freilaufkupplung 42, und der Antriebsmotor 12 wird mitgedreht, wenn ein Rollen bei Rückwärtsfahrt erfolgen soll. Hierbei kann der Antriebsmotor 12 als Generator betrieben werden, wobei ein elektrisches Bremsen erfolgt.

Bei einem Schalten von der ersten Gangstufe in die zweite Gangstufe unter Zug erfolgt die Übergabe von Drehmoment, indem die Lastschaltkupplung 52 kontinuierlich geschlossen wird, so dass sie vorzugsweise hochrampend das Drehmoment übernimmt. Die Freilaufkupplung 42 überträgt dabei automatisch das jeweilige Restdrehmoment.

Nach der Drehmomentübergabe an die Lastschaltkupplung 52 wird die Drehzahlanpassung durchgeführt, das heißt die Drehzahl des Antriebsmotors 12 wird auf die Zieldrehzahl der zweiten Gangstufe abgesenkt. Hierzu wird entweder das Drehmoment an der noch schlupfenden Lastschaltkupplung 52 weiter erhöht ("hochgerampt"), oder es wird ein Momenteneingriff an dem Antriebsmotor 12 durchgeführt. Sobald die Drehzahl des Antriebsmotors 12 absinkt, wird die Freilaufkupplung 42 überrollt und öffnet.

Eine Rückschaltung von der zweiten in die erste Gangstufe unter Zug ist möglich. Ausgehend von einer geschlossenen Lastschaltkupplung 52 und einer überrollten Freilaufkupplung 42 wird eine Drehzahlanpassung durchgeführt, indem der Druck an der Lastschaltkupplung 52 abgesenkt wird, um diese in einen Schlupfzustand zu bringen. Der Antriebsmotor 12 dreht dabei hoch bis auf eine Zieldrehzahl für die erste Gangstufe, während sich die Relativdrehzahl an der Freilaufkupplung 42 kontinuierlich abbaut.

Sobald die Relativdrehzahl an der Freilaufkupplung 42 sich vollständig abgebaut hat, kann der Druck und damit das übertragende Drehmoment der Lastschalt-kupplung 52 verringert werden, das Restdrehmoment wird dann automatisch von der Freilaufkupplung 42 übertragen.

Schub-Schaltungen unter Last sind aufgrund der Freilaufkupplung 42 generell nicht ohne weitere Maßnahmen möglich.

In Fig. 2 ist eine weitere Ausführungsform eines Antriebsstranges 10' dargestellt, der hinsichtlich Aufbau und Funktionsweise generell dem Antriebsstrang 10 der Fig. 1 entspricht. Gleiche Elemente sind daher durch gleiche Bezugszeichen gekennzeichnet. Im Folgenden werden im Wesentlichen die Unterschiede erläutert.

Bei dem Antriebsstrang 10' ist der Antriebsmotor 12 koaxial zu der angetriebenen Achse 16' angeordnet. Eine Motorausgangswelle 86 ist bei dieser Ausführungsform als Hohlwelle ausgebildet, und eine der zwei Abtriebswellen für die angetriebenen Räder 20L, 20R ist durch die Motorausgangswelle 86 hindurchgeführt.

Die Getriebeeingangswelle 24' ist vorliegend ebenfalls als Hohlwelle ausgeführt. Dabei ist die Motorausgangswelle 86 in die Getriebeeingangswelle 24' eingeführt und dort drehfest mit dieser verbunden. Die Verbindung ist in Fig. 2 im Bereich des Getriebeeingangs gezeigt. Um eine größere Durchbiegung der Motorausgangswelle 86 zu ermöglichen, kann die Verbindung zwischen Motorausgangswelle 86 und Getriebe-eingangswelle 24' jedoch auch an dem dem Antriebsmotor 12 entgegengesetzten axialen Ende des Stufengetriebes 14' angeordnet sein.

Die erste Kupplungsanordnung 40 weist bei dem Stufengetriebe 14' an-stelle einer Überbrückungskupplung 54 eine Überbrückungskupplung 88 auf, die dazu ausgebildet ist, in einer Schaltstellung die Freilaufkupplung 42 zu überbrücken, also die Getriebeausgangswelle 26 drehfest mit dem Losrad 38 des ersten Radsatzes 32 zu verbinden.

Die Überbrückungskupplung 88 kann dabei als Klauenkupplung ausgebildet sein. Die Überbrückungskupplung 88 kann ferner in gleicher Weise betätigbar sein wie die Überbrückungskupplung 54 der Ausführungsform der Fig. 1.

Insbesondere kann die Überbrückungskupplung mittels einer mechanischen Vorspannungseinrichtung in eine geöffnete Position vorgespannt sein, bei der die Freilaufkupplung 42 nicht überbrückt ist.

Bei dieser Ausführungsform kann ein Rückwärtsfahrbetrieb eingerichtet werden, indem die Überbrückungskupplung 88 geschlossen wird und die Lastschaltkupplung 52 geöffnet wird. Hierbei kann Antriebsleistung in negativer Richtung (Rückwärtsfahren) durch Drehrichtungsumkehr des Antriebsmotors 12 erfolgen.

Die Überbrückungskupplung 88 kann beim Fahren in der ersten Gangstufe 1 geschlossen werden, um die Freilaufkupplung 42 zu entlasten. Bei dieser Ausführungsform ist beim Fahren im ersten Gang eine Übertragung von Moment im Schubbetrieb möglich. Zum Rollen/Segeln muss die Überbrückungskupplung 88 geöffnet werden.

In Fig. 2 ist ferner gezeigt, dass der Abtriebsradsatz 28' mit einer Druckkammanordnung 90 ausgebildet sein kann, um in dem Verzahnungseingriff entstehende Axialkräfte (bei einer Schrägverzahnung) unmittelbar in die zugeordnete Welle (hier Getriebeausgangswelle 26) einleiten zu können.

Ferner zeigt Fig. 2, dass an der Getriebeausgangswelle 26 ein Parksperrenrad 92 zum Einrichten einer Parksperrenfunktion festgelegt sein kann.

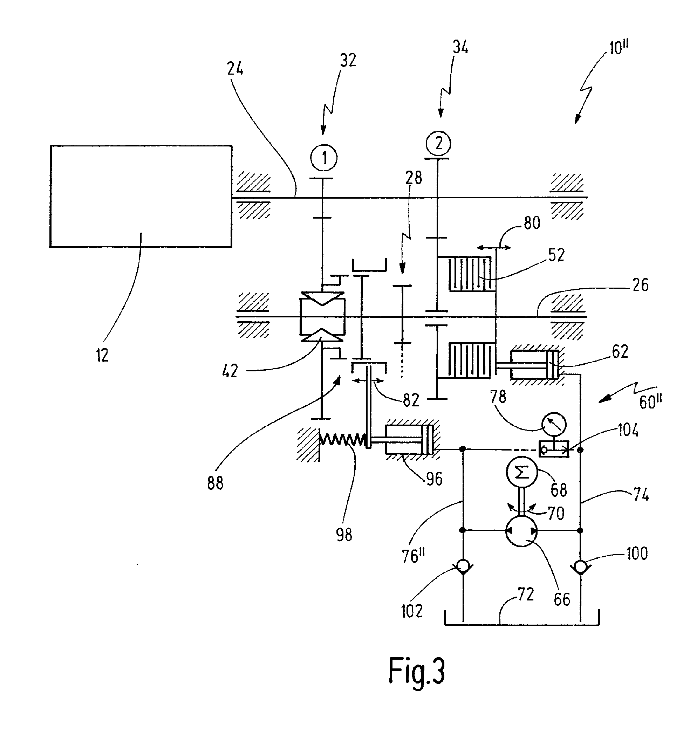

In Fig. 3 ist eine weitere Ausführungsform eines Antriebsstranges 10" gezeigt, dessen grundsätzliches Layout dem Antriebsstrang 10 der Fig. 1 entspricht. Gleiche Elemente sind daher durch gleiche Bezugszeichen gekennzeichnet. Im Folgenden werden im Wesentlichen die Unterschiede erläutert.

Zum einen ist bei dem Antriebsstrang 10' der Freilaufkupplung 42 eine Überbrückungskupplung 88 zugeordnet, wie sie bei dem Antriebsstrang 10 der Fig. 2 realisiert ist, und keine Überbrückungskupplung 54 der in Fig. 1 gezeigten Art. Ferner ist die Aktuatoranordnung 60" so ausgebildet, dass sie nicht nur zur Betätigung der Lastschaltkupplung 52 verwendbar ist, sondern auch zum Betätigen der Überbrückungskupplung 88.

Zu diesem Zweck ist eine zweite Kolben-/Zylinderanordnung 96 vorgesehen, die mittels einer zweiten Rückstellfeder 98 in eine geöffnete Position vorgespannt ist, bei der die Überbrückungskupplung 88 geöffnet ist, die Freilaufkupplung 42 also ihre normale Funktion erfüllt.

Die zweite Kolben-/Zylinderanordnung 96 weist ebenfalls einen einzelnen Anschluss auf. Dieser ist im vorliegenden Fall an den zweiten Pumpenanschluss 76" angeschlossen. Durch Drehrichtungsumkehr des Elektromotors 68 wird ein Fluidvolumenstrom folglich entweder in die erste Kupplungsanordnung 62 oder in die zweite Kolben-/Zylinderanordnung 96 geleitet.

Dabei ist ferner eine Rückschlagventilanordnung mit einem ersten Rückschlagventil 100 und einem zweiten Rückschlagventil 102 vorgesehen. Das erste Rückschlagventil 100 verbindet den ersten Pumpenanschluss 74 mit dem Fluidsumpf 72. Das zweite Rückschlagventil 102 verbindet den zweiten Pumpenanschluss 76" mit dem Fluid-sumpf 72. Demzufolge kann gewährleistet werden, dass bei der Förderung von Fluid in beiden Drehrichtungen das Fluid aus dem Fluidsumpf 72 gefördert werden kann.

Zum Betätigen der Lastschaltkupplung 52 wird die Pumpe 66 folglich mittels des Motors 68 angetrieben. Wenn die Überbrückungskupplung 88 zu schließen ist, was lediglich dann der Fall ist, wenn die Lastschaltkupplung 52 geöffnet ist, wird die Drehrichtung 70 der Pumpe 66 umgekehrt, und Fluid wird aus dem Fluidsumpf 72 über das erste Rückschlagventil 100 in den zweiten Pumpenanschluss 76" und folglich in die zweite Kolben-/Zylinderanordnung 96 gefördert.

Ein Drucksensor ist an dem zweiten Pumpenanschluss 76" nicht unbedingt erforderlich. Der Druck an dem zweiten Pumpenanschluss 76" muss nicht feinfühlig regelbar sein, da die Überbrückungskupplung 88 vorzugsweise als Klauenkupplung ausgebildet ist, die entweder geschlossen oder geöffnet ist, also keinen Schlupfzustand einrichten kann.

Alternativ hierzu kann jedoch ein einzelner Drucksensor 78 über ein Wechselventil 104 sowohl zur Erfassung des Druckes an dem ersten Pumpenanschluss 74 als auch an dem zweiten Pumpenanschluss 76" verwendet werden. Das Wechselventil 104 verbindet dabei die Pumpenanschlüsse 74', 76". Mittels des Wechselventils 104 wird erreicht, dass jeweils der höhere Druck in den Pumpenanschlüssen 74, 76" gemessen wird.

Für die Überbrückungskupplung 88 sind im Wesentlichen keine zusätzlichen Bauelemente zur Aktuierung erforderlich.

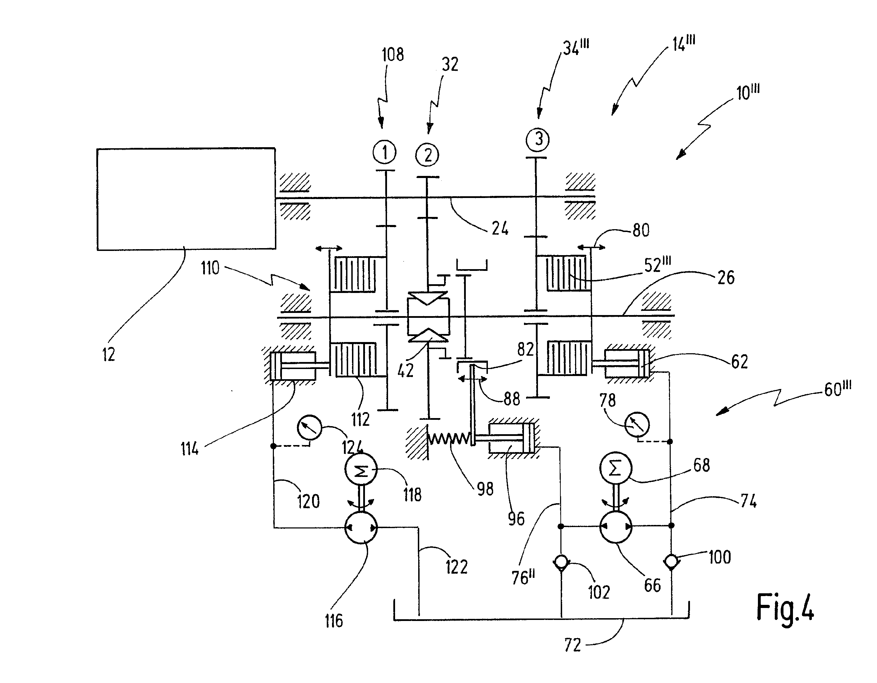

In Fig. 4 ist eine weitere Ausführungsform eines Antriebsstranges 10"' gezeigt, dessen grundsätzliches Layout und dessen grundsätzliche Funktionsweise dem Antriebsstrang 10" der Fig. 3 entsprechen. Gleiche Elemente sind daher durch gleiche Bezugszeichen gekennzeichnet. Im Folgenden werden im Wesentlichen die Unterschiede erläutert.

In dem Stufengetriebe 14"' des Antriebsstranges 10"' sind nicht, wie bei den oben beschriebenen Ausführungsformen, zwei Gangstufen einrichtbar, sondern drei Gangstufen. Dabei ist der Aufbau zur Einrichtung der ersten Gangstufe mittels des ersten Radsatzes 32 und der Freilaufkupplung 42 identisch ausgebildet wie bei dem Antriebsstrang 10" der Fig. 3. Ferner ist zur Einrichtung der höchsten (dritten) Gangstufe ein zweiter Radsatz 34"' vorgesehen. Der zweite Radsatz 34"' wird mittels einer ersten Lastschaltkupplung 52'" geschaltet. Die Aktuatoranordnung 60'" ist zur Betätigung der Überbrückungskupplung 88 und der ersten Lastschaltkupplung 52'" identisch aufgebaut wie bei der Ausführungsform der Fig. 3, mit der Ausnahme, dass der Drucksensor 78 lediglich an dem ersten Pumpenanschluss 74 angeschlossen ist. An dem zweiten Pumpenanschluss 76" ist hierbei kein Drucksensor angeschlossen.

Zur Einrichtung einer weiteren Gangstufe, die im vorliegenden Fall als die zweite Gangstufe ausgebildet ist, ist ein dritter Radsatz 108 vorgesehen. Der dritte Radsatz 108 kann alternativ auch zur Einrichtung der höchsten Gangstufe vorgesehen sein. In diesem Fall ist der zweite Radsatz 34"' zur Einrichtung der zweiten Gangstufe vorgesehen.

Der dritte Radsatz 108 ist mittels einer dritten Kupplungsanordnung 110 schaltbar, die eine zweite Lastschaltkupplung 112 aufweist. Der grundsätzliche Aufbau der zweiten Lastschaltkupplung 112 und deren Betätigung mittels einer dritten Kolben-/Zylinderanordnung 114 ist generell identisch wie bei der ersten Lastschaltkupplung 52"'.

Die Radsätze 108, 32, 34"' sind bei dieser Ausführungsform bevorzugt in dieser Reihenfolge in axialer Richtung zwischen den zwei Lastschaltkupplungen 52"', 112 angeordnet.

Zur Betätigung der zweiten Lastschaltkupplung 112 ist eine weitere Pumpenaktuatorik vorgesehen, die eine zweite Pumpe 116 aufweist. Die zweite Pumpe 116 ist vorzugsweise als bidirektionale Pumpe ausgebildet und ist mittels eines zweiten Elektromotors 118 antreibbar. Die zweite Pumpe 116 weist einen ersten Pumpenanschluss 120 auf, der mit der dritten Kolben-/Zylinderanordnung 114 direkt verbunden ist. Ferner weist die zweite Pumpe 116 einen zweiten Pumpenanschluss 122 auf, der mit dem Fluidsumpf 72 verbunden ist. An den ersten Pumpenanschluss 120 ist ein zweiter Drucksensor 124 angeschlossen.

Die erste Pumpe 66 und die zweite Pumpe 116 sind unabhängig voneinander ansteuerbar, so dass zwischen den Gangstufen 2 und 3 Gangwechsel unter Last ohne Zugkraftunterbrechung durchführbar sind, also mit einer Drucküberschneidung. Zu diesem Zweck sind auch für den ersten Pumpenanschluss 74 der ersten Pumpe 66 und den ersten Pumpenanschluss 120 der zweiten Pumpe 116 getrennte Drucksensoren 78, 124 vorgesehen.

Die Getriebeausgangswelle 26 kann wie bei den Ausführungsformen der Figuren 1 und 3 mit einem Differential 18 über einen Abtriebssatz 28 verbunden sein, wobei das Differential 18 einer angetriebenen Achse 16 zugeordnet ist, die parallel versetzt zu den Wellen 24, 26 des Stufengetriebes 14"' angeordnet ist. Alternativ hierzu ist es auch möglich, den Antriebsstrang 10"' der Fig. 4 in ähnlicher Weise auszugestalten, wie es in Fig. 2 gezeigt ist, wobei ein Differential 18' einer angetriebenen Achse 16' zugeordnet ist, die koaxial zu der Getriebeeingangswelle 24' und koaxial zu dem Antriebsmotor 12 angeordnet ist.

Bei dem Antriebsstrang 10"' werden Gangwechsel von der Gangstufe 1 in die Gangstufe 2 durchgeführt, wie es oben beschrieben worden ist. Gangwechsel von der Gangstufe 2 in die Gangstufe 3 werden durch überschneidende Betätigung der zwei Lastschaltkupplungen 52"', 112 durchgeführt.

Generell ist es auch möglich, Gangwechsel direkt zwischen den Gangstufen 1 und 3 durchzuführen, wobei der Ablauf dann wiederum identisch ist wie oben in Bezug auf die anderen Ausführungsformen beschriebene Gangwechsel zwischen der Gangstufe 1 und 2.

## Patentansprüche

1. Stufengetriebe (14) für ein Kraftfahrzeug, mit einem Getriebeeingang (24), der mit einem Antriebsmotor (12) verbindbar ist, und mit einem Getriebeausgang (26), der mit einer angetriebenen Achse (16) eines Kraftfahrzeuges verbindbar ist, wobei das Stufengetriebe (14) zur Einrichtung wenigstens einer ersten und einer weiteren Gangstufe (1, 2; 1,3) ausgebildet ist, wobei eine Kraftübertragung von Getriebeeingang (24) zu Getriebeausgang (26) in der ersten Gangstufe (1) über eine erste Kupplungsanordnung (40) erfolgt, wobei eine Kraftübertragung von Getriebeeingang (24) zu Getriebeausgang (26) in der weiteren Gangstufe (2) über eine zweite Kupplungsanordnung (50) erfolgt, und wobei die zweite Kupplungsanordnung (50) eine Lastschaltkupplung (52) aufweist,
**dadurch gekennzeichnet, dass**
die erste Kupplungsanordnung (40) eine Freilaufkupplung (42) aufweist.

2. Stufengetriebe nach Anspruch 1, **dadurch gekennzeichnet, dass** die Freilaufkupplung (42) mittels einer schaltbaren Überbrückungskupplung (88; 54) überbrückbar und/oder von dem Getriebeausgang (26) entkoppelbar ist.

3. Stufengetriebe nach Anspruch 2, **dadurch gekennzeichnet, dass** die Überbrückungskupplung (88; 54) als Klauenkupplung ausgebildet ist.

4. Stufengetriebe nach Anspruch 2 oder 3, **dadurch gekennzeichnet, dass** die Überbrückungskupplung (88; 54) mittels einer mechanischen Vorspannungseinrichtung (98) in eine geöffnete Position vorgespannt ist, bei der die Freilaufkupplung (42) nicht überbrückt ist, oder in eine geschlossene Position vorgespannt ist, in der die Freilaufkupplung (42) mit dem Getriebeausgang (26) gekoppelt ist.

5. Stufengetriebe nach einem der Ansprüche 1 bis 4, **dadurch gekennzeichnet, dass** die Lastschaltkupplung (52) mittels eines ersten hydraulischen Aktuators (62) betätigbar ist, der mit einer Pumpe (66) direkt verbunden ist, deren Drehzahl zur Betätigung der Lastschaltkupplung (52) steuerbar ist.

6. Stufengetriebe nach Anspruch 5, **dadurch gekennzeichnet, dass** die Pumpe (66) als bidirektionale Pumpe ausgebildet ist, deren erster Anschluss (74) mit dem ersten hydraulischen Aktuator (62) verbunden ist und deren zweiter Anschluss (76") mit einem zweiten hydraulischen Aktuator (96) verbunden ist, der der ersten Kupplungsanordnung (40) zugeordnet ist.

7. Stufengetriebe nach Anspruch 6, **dadurch gekennzeichnet, dass** der zweite hydraulische Aktuator (96) zur Betätigung einer Überbrückungskupplung (88; 54) der ersten Kupplungsanordnung (40) ausgebildet ist.

8. Stufengetriebe nach einem der Ansprüche 5 bis 7, **dadurch gekennzeichnet, dass** ein erster und ein zweiter Anschluss (74, 76") der Pumpe (66) über ein Wechselventil (104) mit einem einzelnen Drucksensor (78) verbunden sind.

9. Stufengetriebe nach einem der Ansprüche 5 bis 8, **dadurch gekennzeichnet, dass** eine noch weitere Gangstufe (2) mittels einer dritten Kupplungsanordnung (110) einrichtbar ist, die eine zweite Lastschaltkupplung (112) aufweist.

10. Verfahren zum Durchführen einer Zug-Hochschaltung (1→2) von der ersten in die zweite Gangstufe eines Stufengetriebes (14) nach einem der Ansprüche 1 bis 9, mit den Schritten, die zweite Kupplungsanordnung (50) kontinuierlich zu schließen, um das Drehmoment allmählich zu übernehmen, wobei die Freilaufkupplung (42) das jeweilige Restdrehmoment überträgt, und nach der Drehmomentübergabe eine Drehzahlanpassung durchzuführen.

11. Verfahren zum Durchführen einer Zug-Rückschaltung (2→1) von der zweiten in die erste Gangstufe eines Stufengetriebes (14) nach einem der Ansprüche 1 bis 9, mit den Schritten, die zweite Kupplungsanordnung (50) zunächst in einen Schlupfzustand zu bringen und anschließend die Drehzahl am Getriebeeingang (24) auf eine Zieldrehzahl der ersten Gangstufe (1) zu erhöhen und den Schlupfzustand abzubauen, wobei anschließend das von der zweiten Kupplungsanordnung (50) übertragene Drehmoment verringert wird, bis das Drehmoment von der Freilaufkupplung (42) übertragen wird.

12. Verfahren zum Betreiben eines Stufengetriebes (14) nach einem der Ansprüche 1 bis 9, mit dem Schritt, in einem Rückwärtsfahrbetrieb die der zweiten Gangstufe (2) zugeordnete Lastschaltkupplung (52) so schlupfend zu betreiben, dass ein Verspannungszustand in dem Stufengetriebe (14) unterhalb eines vorbestimmten Schwellenwertes bleibt.
